# EUROPEAN PATENT APPLICATION

(11) **EP 4 579 516 A1**
(43) Date of publication of application: **02.07.2025**
(21) Application number: 24222827.8
(22) Date of filing: 23.12.2024
(51) Int. Cl.: G06F 40/18, G06F 16/242

(54) **METHODS AND SYSTEMS FOR SPREADSHEET TO DATABASE CONVERSION**

(30) Priority: 27.12.2023 US 202318397777
(71) Applicant: Highradius Corporation, Houston, TX 77042 (US)
(72) Inventor: MOHAN, Ram, 500081 Hyderabad (IN); BONI, Prasanna, 500081 Hyderabad (IN); MISHRA, Anushka, 500081 Hyderabad (IN); RANJAN, Khushika, 500081 Hyderabad (IN)
(74) Representative: Mewburn Ellis LLP

(57) **Abstract**

The present invention is related to data processing methods and systems thereof. According to an embodiment, the present invention provides a method of receiving a first formula or a query in the spreadsheet interface comprising a first formula. Next, an expression tree is generated using at least the first formula or an abstract syntax tree. The expression tree can be organized hierarchically. The method can continue by obtaining a first algebra expression using at least the expression tree and generating at least a first database query using at least the first algebra expression. Next, the first database query can be executed against at least a first data source to obtain a first result and the first result can be processed to provide an output. There are other embodiments as well.

## Description

### FIELD OF THE INVENTION

Embodiments of the present disclosure relate to methods and systems for spreadsheet to database conversion.

### BACKGROUND OF THE INVENTION

The present invention is directed to data processing.

Spreadsheet programs, like Microsoft Excel and Google Sheets, are used extensively in the field of financial analysis. These programs are favored for their versatility in handling a wide range of financial data and tasks. For example, spreadsheet programs come equipped with built-in formulas and functions capable of handling various financial tasks. Users also have the flexibility to create custom formulas and functions tailored to their specific needs. Thus, these programs play a critical role in financial operations such as budgeting, forecasting, investment analysis, and other financial operations. However, as explained below, existing spreadsheet programs and applications are inadequate for various tasks.

Therefore, new and improved methods and systems are desired.

### BRIEF SUMMARY OF THE INVENTION

The present invention is related to data and formula processing methods and systems thereof.

In a first aspect, a method for processing a spreadsheet formula can include receiving a first formula; generating an abstract syntax tree using at least the first formula; generating an expression tree using at least the abstract syntax tree, the expression tree being organized hierarchically; obtaining a first algebra expression using at least the expression tree; generating at least a first database query using at least the first algebra expression; executing the first database query against at least a first data source to obtain a first result; and processing the first result to provide an output.

In some embodiments, the method can further include processing one or more data sources using at least the first formula. In some cases, the method can include traversing the abstract syntax tree to generate the expression tree. The abstract syntax tree can be organized hierarchically.

The method can further include removing redundant elements from the expression tree and removing redundant elements from the expression tree. In various instances, the method can further include optimizing the first algebra expression.

In some instances, the method can include establishing a connection to the first data source. In various embodiments, the method can further include executing the first database query against a second data source to obtain the first result.

In various cases, the method can further include providing an interface for displaying the output. The output can include a tabular format allowing for navigation and sorting.

In some embodiments, the method can further include updating the output in response to a change at the first data source and/or executing the first database query in response to the change at the first data source. In some cases, the method can further include associating first data of at least the first data source with at least the first database query; detecting second data has been added to at least the first data source; determining whether the second data is associated with at least the first query; and based on a determination the second data is associated with at least the first query, updating the output.

In various instances, the method further includes prioritizing and executing a queue of queries, the queue of queries comprising the first query.

In another aspect, an apparatus for processing a spreadsheet formula comprises one or more processors and a non-transitory computer readable medium communicatively coupled to the one or more processors, the non-transitory computer readable medium having stored thereon computer software comprising a set of instructions that, when executed by the one or more processors, cause the apparatus to receive a first formula; generate an abstract syntax tree using at least the first formula; generate an expression tree using at least the abstract syntax tree, the expression tree being organized hierarchically; obtain a first algebra expression using at least the expression tree; generate at least a first database query using at least the first algebra expression; execute the first database query against at least a first data source to obtain a first result; and process the first result to provide an output.

In various cases, the apparatus can further be configured to cause the apparatus to remove redundant elements from the expression tree and/or update the output in response to a change at the first data source.

In yet another aspect, a device for processing a spreadsheet formula comprises one or more processors and a non-transitory computer readable medium communicatively coupled to the one or more processors, the non-transitory computer readable medium having stored thereon computer software comprising a set of instructions that, when executed by the one or more processors, cause the device to receive at least a first formula; generate an abstract syntax tree using at least the first formula; generate an expression tree using at least the abstract syntax tree; obtain a first algebra expression using at least the expression tree; generate at least a first database query using at least the first algebra expression; execute the first database query against at least a first data source to obtain a first result; and process the first result to provide an output. In some cases, the output can be displayed in a tabular format and capable of providing navigation and sorting.

It is to be appreciated that embodiments of the present invention provide many advantages over conventional techniques. Among other things, this invention provides the usability of a spreadsheet interface with the data handling capabilities of a database. Transferring data from spreadsheets to databases can be a complex process requiring knowledge of both the spreadsheet program and knowledge in software, languages, and tools such as SQL and Python to interact with data store on a database. This invention allows a user (e.g., financial analysts, accountants, or the like) to use a spreadsheet interface without requiring the user to have knowledge in software, languages, and tools such as SQL and Python to interact with data stored on a database. It is to be appreciated that embodiments of the present invention are not restricted by the type of memory storage in use, whether it be a hard disk, non-volatile memory, a database, or a server connected to a network. This scalability ensures compatibility with various infrastructures, improving its adaptability in different contexts.

The present invention achieves these benefits and others in the context of known technology. However, a further understanding of the nature and advantages of the present invention may be realized by reference to the latter portions of the specification and attached drawings.

### BRIEF DESCRIPTION OF THE DRAWINGS

A further understanding of the nature and advantages of particular embodiments may be realized by reference to the remaining portions of the specification and the drawings, in which like reference numerals are used to refer to similar components. In some instances, a sub-label is associated with a reference numeral to denote one of multiple similar components. When reference is made to a reference numeral without specification to an existing sub-label, it is intended to refer to all such multiple similar components.

### DETAILED DESCRIPTION OF THE INVENTION

The present invention is related to data processing methods and systems thereof. According to an embodiment, the present invention provides a method of receiving a first formula or a query, wherein the first formula or query is a spreadsheet formula. Subsequently, an abstract syntax tree is generated using the first formula. Next, an expression tree is generated using at least the abstract syntax tree. The expression tree can be organized hierarchically. The method can continue by obtaining a first algebra expression using at least the expression tree and generating at least a first database query using at least the first algebra expression. Next, the first database query can be executed against at least a first data source to obtain a first result and the first result can be processed to provide an output. There are other embodiments as well.

As mentioned above, spreadsheet programs have their limitations for various types of applications. For example, spreadsheet programs have inherent limitations in terms of the number of cells, columns, and rows they can handle. When these limits are exceeded, users may experience errors, data loss, or performance issues. These limitations become particularly evident when dealing with very large datasets, which are increasingly common in complex financial analysis. While spreadsheets are equipped with numerous built-in formulas and functions, they are not ideally suited for intricate data analysis and manipulation that goes beyond basic calculations. Advanced statistical analysis, predictive modeling, and data mining tasks are often beyond the scope of traditional spreadsheet capabilities. Spreadsheets are not scalable solutions for managing large volumes of data. As the size of the dataset grows, performance can significantly degrade. Additionally, spreadsheets typically lack robust security features for data storage and sharing, making them vulnerable to unauthorized access and data breaches, especially in environments where data sensitivity is a high concern.

To overcome these limitations, users such as financial analysts often turn to databases, which are better suited for storing, managing, and querying large volumes of records. However, working with databases often requires technical skills and knowledge in software, languages, and tools such as SQL and Python. These are not typically within the skill set of most financial analysts and can be time-consuming to learn. Transferring data from spreadsheets to databases can be a complex process, requiring a good understanding of both systems. This integration challenge can be a significant barrier for financial analysts who are more accustomed to spreadsheet environments.

It is to be appreciated that embodiments of the present invention address these challenges by introducing systems and methods for converting spreadsheet formulas into database queries (e.g., SQL queries) without the need for users to understand the database queries themselves. This innovation aims to bridge the gap between the user-friendly nature of spreadsheets and the robust data handling capabilities of databases. By doing so, it enables financial analysts to leverage the power of databases for advanced data analysis without the need to acquire extensive technical expertise in database management. In various embodiments, the present invention enhances the efficiency and accuracy of financial data analysis, making it a valuable development in the field.

The following description is presented to enable one of ordinary skills in the art to make and use the invention and to incorporate it in the context of particular applications. Various modifications, as well as a variety of uses in different applications will be readily apparent to those skilled in the art, and the general principles defined herein may be applied to a wide range of embodiments. Thus, the present invention is not intended to be limited to the embodiments presented, but is to be accorded the widest scope consistent with the principles and novel features disclosed herein.

In the following detailed description, numerous specific details are set forth in order to provide a more thorough understanding of the present invention. However, it will be apparent to one skilled in the art that the present invention may be practiced without necessarily being limited to these specific details. In other instances, well-known structures and devices are shown in block diagram form, rather than in detail, in order to avoid obscuring the present invention.

The reader's attention is directed to all papers and documents which are filed concurrently with this specification and which are open to public inspection with this specification, and the contents of all such papers and documents are incorporated herein by reference. All the features disclosed in this specification, (including any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

Please note, if used, the labels left, right, front, back, top, bottom, forward, reverse, clockwise and counterclockwise have been used for convenience purposes only and are not intended to imply any particular fixed direction. Instead, they are used to reflect relative locations and/or directions between various portions of an object.

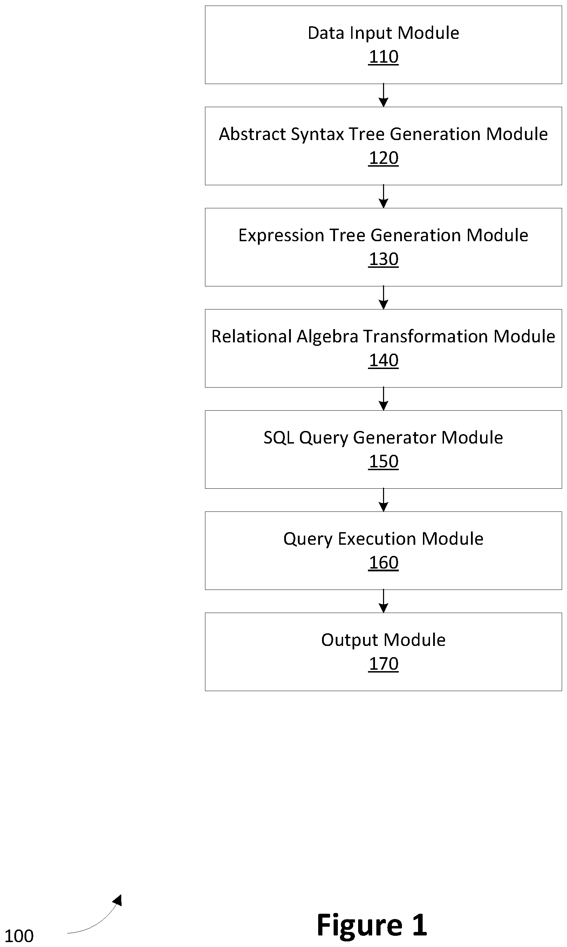

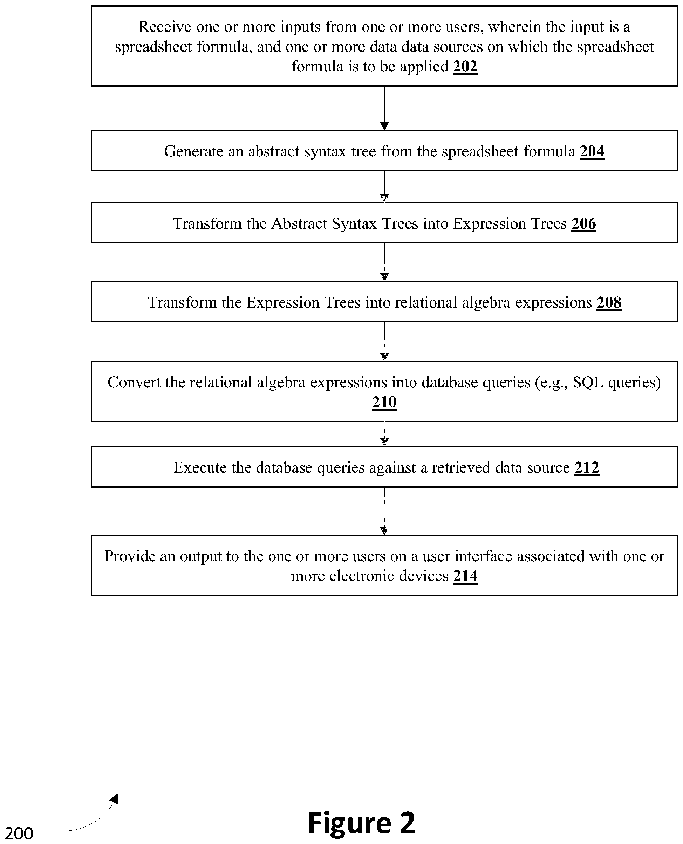

Figure 1 is a simplified diagram illustrating a data processing system 100 according to embodiments of the present invention. Figure 2 is a data processing method 200 that can be implemented using the data processing system 100 of Figure 1. In some cases, the system 100 can be used to perform other methods while the method 200 can be implemented using other systems. The system/method are merely examples, which should not unduly limit the scope of the claims. One of ordinary skill in the art would recognize many variations, alternatives, and modifications. As an example, system 100 includes components of the computer-based system for converting one or more formulas in a spreadsheet into one or more database queries are as follows:

| **Module** | **Functionality** |
|---|---|
| Data Input Module 110 | The Data Input Module 110 is configured to receive one or more inputs from the one or more users. In an embodiment, the one or more inputs includes the information related to at least one of (1) a spreadsheet formula and (2) one or more data sources on which the spreadsheet formula is to be applied. |
| Abstract Syntax Tree Generation Module 120 | The Abstract Syntax Tree Generation module 120 is configured to generate one or more abstract syntax trees from the one or more inputs. |
| Expression Tree Generation Module 130 | The Expression Tree Generation Module 130 is configured to transform the one or more abstract syntax trees generated by the Abstract Syntax Tree Generation Module 120 into one or more expression trees. |
| Relational Algebra Transformation Module 140 | The Relational Algebra Transformation Module 140 is configured to transform the one or more expression trees generated by the Expression Tree Generation Module 130 into one or more relational algebra expressions. |
| Database Query Generator Module 150 | The Database Query Generator Module 150 is configured to receive the one or more relational algebra expressions generated by the Relational Algebra Transformation Module 140, which represent the logical operations needed to execute the one or more inputs from the spreadsheet, and translate the relational algebra expressions into one or more database queries (e.g., SQL queries). |
| Query Execution Module 160 | The Query Execution Module 160 is configured to execute the one or more database queries (e.g., SQL queries) generated by the Database Query Generator Module 150 against one or more data sources (e.g., one or more databases). The Query Execution Module's 160 primary purpose is to manage the execution of these queries efficiently, retrieve the necessary data, and produce the results of the spreadsheet formula computation. |
| Output Module 170 | The Output Module 170 is configured to present the results to the user in a structured and visually appealing manner on a user interface. |

As an example, the terms "module," "submodule," and "stage" are understood to encompass a functional component of a system, which may be implemented in software, hardware, or a combination of both. A module, submodule, or stage implemented in software may include but is not limited to a subroutine, a function, a procedure, an object, a class, an instance, a sequence of instructions or a part of a software program. The software may be stored on a non-transitory computer-readable medium and may be executed by one or more processors of a computing device. On the other hand, a module implemented in hardware may include but is not limited to a circuit, an integrated circuit, a microcontroller, a microprocessor, a system-on-chip (SoC), a field-programmable gate array (FPGA), or other custom or commercially available hardware components or devices, or a combination thereof. A module, submodule, or stage may also be implemented as a combination of software and hardware components, where the software controls, instructs, or otherwise interfaces with the hardware to perform the intended functionalities of the module, submodule, or stage. It will be appreciated that the decision as to whether to implement a module, submodule, or stage in hardware or software, or a combination thereof, would be driven by the cost and performance considerations that are well-known in the art.

It is understood that a "module," "submodule," or "stage" as used herein refers to an abstract functional component and may be distributed among different hardware and software components in various locations and systems, and is not limited to a single functional component located in a single location.

According to various embodiments, the data input module 110 and/or method 200 at block 202 can be configured to receive one or more inputs from one or more users of an electronic device (e.g., a computer, a laptop, a phone, or the like). In various cases, the one or more inputs can be received in a spreadsheet program, in a spreadsheet interface, or other program or interface configured to receive one or more inputs. In an embodiment, the one or more inputs include information related to at least one of: a spreadsheet formula, a location (e.g., column, row, sheet, table header, or the like) of the spreadsheet formula, and one or more data sources (e.g., customer data, company data, or the like) on which the spreadsheet formula is to be applied. In some embodiments, the data sources may include any relational database. Examples of relational databases include snowflake, noSQL, postgre SQL and the like.

The data sources can have the capability to store an extensive range of data or documents in a variety of data or document formats (e.g., tabular data, non-tabular data, paragraph data, or the like), in a variety of data or document types including, but not limited to, PDF, spreadsheets, text documents, images, JPG, PNG, GIG, TIFF, email, HTML, XML, CSV files, and others commonly employed in financial systems, and in a variety of languages (e.g., English, Spanish, French, Chinese, etc.). In various cases, the data sources can store this data or these documents such that the data sources can identify and extract relevant data or documents based on the one or more user inputs received by the data input module 110.

In various cases, when the one or more inputs are received, the one or more inputs can indicate, in some cases, a source of the data. In a non-limiting example, if the formula is received in a table called "customer," "customer table," or the like, then this could indicate that the source of the data is a database including customer information. Thus, when executing the one or more database queries, the query execution module 160 can execute the queries on one or more databases including customer information.

The process to extract relevant data or documents based on the one or more user inputs from the one or more data sources is further described below with respect to modules 120-170.

The plurality of modules 100 further includes an Abstract Syntax Tree Generation module 120 that is configured to generate an abstract syntax tree from the one or more inputs (e.g., the spreadsheet formula) (block 204 of method 200).

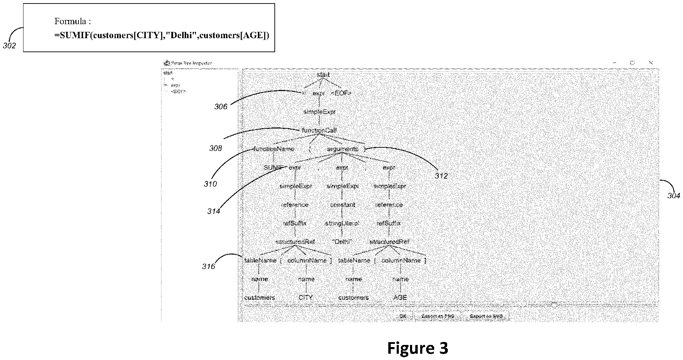

In one embodiment, the abstract syntax tree is a formally defined tree-like data structure (shown in Figure 3) that represents the syntactic structure of the one or more inputs such as the formula of the spreadsheet in a hierarchical manner. The abstract syntax tree can be constructed according to predefined grammar rules of a spreadsheet program and serves to abstract and organize the elements of the spreadsheet formula based on the predefined grammar rules to the spreadsheet program. Each node in the abstract syntax tree corresponds to a specific syntactic construct within the formula, such as operators, functions, cell references, and literals.

In some embodiments, the Abstract Syntax Tree of a spreadsheet formula comprises nodes organized as follows:
1. Terminal Nodes: These represent the fundamental building blocks of the formula, including cell references, constants, and variables.
2. Non-terminal Nodes: These represent higher-level constructs, such as operators (e.g., addition, multiplication), functions (e.g., SUMIF), and parentheses, which dictate the order of operations and expression grouping.

For example, as shown in Figure 3, the spreadsheet interface of the data input module 110 can receive a formula 302 (e.g., =SUMIF(customers[CITY],"Delhi",customers[AGE]) as an input. The abstract syntax tree generation module 120 can then analyze the formula 302 to generate the abstract syntax tree 304 and determine terminal nodes and non-terminal nodes based on one or more grammar rules of a spreadsheet program.

In various cases, the abstract syntax tree generation module 120 can preserve the hierarchical relationships between the terminal and non-terminal nodes by reflecting the formula's structure and ensuring that the formula can be parsed, evaluated, and manipulated. This structured representation abstracts away extraneous or irrelevant details contained in the formula 302 and makes the formula easier to work with and obtain the desired results from the one or more data sources. For example, the abstract syntax tree can remove punctuation (e.g., commas) from a formula and focus on the essential components of a formula.

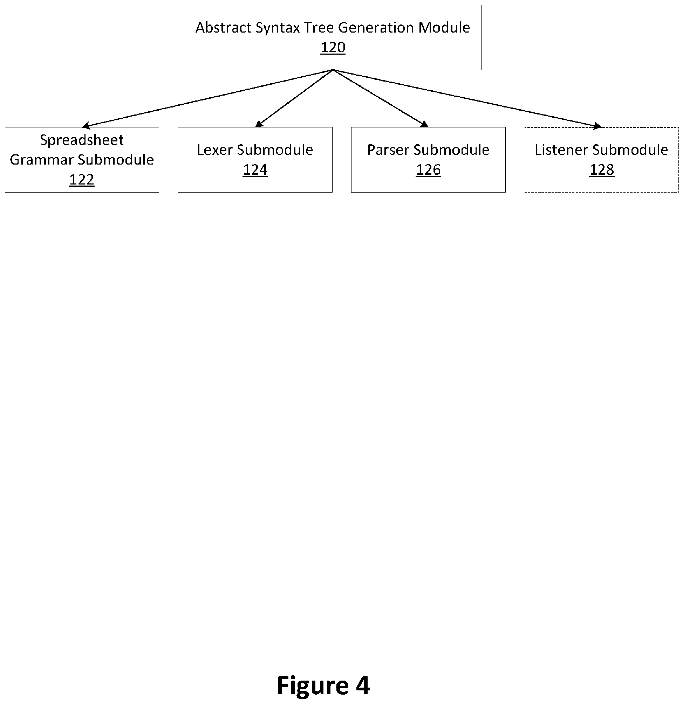

In certain embodiments, the abstract syntax tree generation module 120 can include a plurality of submodules for generation of the abstract syntax tree 304 using the formula 302. The submodules can include at least one of: a Spreadsheet Grammar Rule submodule 122, a Lexer submodule 124, a Parser submodule 126, and an optional listener submodule 128 shown in Figure 4.

The spreadsheet grammar rule submodule 122 is configured to define the grammar rules of a spreadsheet program required for the conversion of the formula 302 into one or more abstract syntax trees.

In one embodiment, the spreadsheet grammar rule submodule 122 comprises a set of predefined rules, each specifying how various elements within a formula should be structured and combined to create a valid abstract syntax tree. The spreadsheet grammar rule submodule 122 can contain one or more rules that can be used to identify one or more functions, operators, references, constants, and their respective syntax and semantics within a spreadsheet program and/or can be used to identify one or more other rules of the spreadsheet program. When the spreadsheet interface receives the formula 302, the abstract syntax tree generation module 120 can retrieve one or more spreadsheet rules of a spreadsheet program to use to generate the abstract syntax tree 304. In a non-limiting example, when the spreadsheet interface receives the formula 302, the abstract syntax tree generation module 120 using one or more rules defined in the Spreadsheet Grammar Rule submodule 122 can identify whether the formula 302 is a formula. For example, if the spreadsheet interface is using the rules of Excel, the abstract syntax tree generation module 120 can first determine whether the formula 302 begins with an equal sign (e.g., =) using the one or more rules of the spreadsheet grammar rule submodule 122. If the formula begins with an equal sign, this can indicate that a formula has been entered at a particular location (e.g., row or column) of the spreadsheet interface and that the formula needs to be converted into a database query.

In some instances, the spreadsheet grammar rule submodule 122 supports parameter-driven configurations to adapt to specific spreadsheet versions and variations and to identify functions, operators, references, constants, and their respective syntax and semantics based on specific spreadsheet versions and variations. In other words, a user could enter one or more formulas into one or more different spreadsheet programs, interfaces, or versions and the spreadsheet grammar rule submodule 122 can adapt or adjust the rules to generate the abstract syntax tree from the formula based on one or more rules for the spreadsheet version or variation used. The spreadsheet grammar rule submodule 122 and/or abstract syntax tree generated by the abstract syntax tree generator module 120 can be updated whenever a new spreadsheet version is released or a different spreadsheet program is used. In a non-limiting embodiment, the spreadsheet grammar rule submodule 122 can comprise grammar rules or formula rules already defined in popular spreadsheet products such as Excel or Google Sheets.

In various embodiments, the spreadsheet grammar rule submodule 122 can define error-handling rules to identify and manage syntax errors or inconsistencies in user-entered formulas. Error rules ensure that users receive meaningful feedback when they input an invalid formula. For example, if the formula is missing a parentheses or the like, the spreadsheet grammar rule submodule 122 can detect that there is an error in the formula and display an error to a user on the spreadsheet interface, a user interface associated with data input module 110, and/or a user interface associated with output module 170.

In yet another embodiment, the spreadsheet grammar rule submodule 122 is designed to allow for the addition of new rules for newly introduced functions, for the addition of user defined rules, or the like.

In a non-limiting example, shown in Figure 3, the spreadsheet grammar rule submodule 122 can contain one or more rules associated with the SUMIF function of the formula. For example, a first element followed by a comma of the SUMIF formula can be associated with a rule for defining a condition when a value should be summed (e.g., if the customers are associated with a particular condition, then sum values of customers associated with the particular condition). A second element followed by a comma of the SUMIF formula can be associated with a rule for defining the condition (e.g., Delhi) when the value should be summed. A third element of the SUMIF formula followed by a closed parenthesis can be associated with what value (e.g., age) should actually be summed based on a determination that a condition for a customer is met. These rules can then be used by the lexer submodule 124 to identify one or more tokens of the formula as explained below.

In some embodiments, the lexer submodule 124 is configured for performing lexical analysis of the one or more inputs (e.g., spreadsheet formula or the like) and breaking down the input formula into discrete tokens following the rules defined in the spreadsheet grammar rule submodule 122 or other rules. The tokens, along with their positions in a formula, can be used to form a token stream that serves as an input to the parser submodule 126 to form the hierarchal abstract syntax tree 304.

In one embodiment, the lexer submodule 124 uses a tokenization processes to scan the one or more inputs (e.g., formula or the like) to identify and categorize the formula's constituent elements or patterns into different tokens or token types. In various cases, the lexer submodule 124 can scan the formula character by character to identify the formula's constituent elements or patterns. These constituent elements or patterns can include keywords, operators, constants, expressions, identifiers, references, and other language-specific constructs. In various cases, the lexer submodule 124 can further operate using pre-defined grammar rules (e.g., one or more rules defined by spreadsheet grammar rule submodule 122) to further identify constituent elements or patterns within the formula and categorize the one or more constituent elements or patterns into different tokens or different token types.

Once the lexer submodule 124 identifies tokens in the input formula, the lexer submodule 124 can then transmit these tokens along with information associated with the tokens to the parser submodule 126. The information associated with the tokens can include, without limitation, token type (e.g., keyword, operator, constant, identifier, expression, reference, function, or the like), text value (e.g., number, word, or the like associated with token type), position within the formula and/or spreadsheet, or other information associated with the token. In certain embodiments, the lexer submodule 124 typically keeps track of the position of each token in the input formula.

In certain embodiments, the lexer submodule 124 can also handle error conditions, such as recognizing invalid characters or sequences that do not match any defined token pattern or defined token pattern type. Based on a detection of one or more errors, the lexer submodule 124 can communicate with the input module 110 and/or output module 170 to display an error to a user on the spreadsheet interface and/or a user interface.

In various embodiments, the lexer submodule 124, using the spreadsheet grammar submodule 122, can be customized to handle various spreadsheet products, spreadsheet versions, language variations, extensions, additional token types, customized token types, or the like specific to the spreadsheet product or version.

In certain embodiments, the lexer submodule 124 can generate a data object using lexer generator tools such as ANother Tool for Language Recognition (ANTLR) or the like. These tools simplify the process of defining lexer rules and generating the lexer code. In other embodiments, other lexer generation tools such as Flex or Lex may be used.

In various embodiments, the lexer submodule 124 is communicatively coupled to the parser submodule 126. The lexer submodule 124 can provide the parser submodule 126 with the token stream, enabling the parser submodule 126 to analyze the syntactic structure of the one or more inputs input based on the tokens generated by the lexer submodule 124 and to generate the abstract syntax tree based on the tokens.

In a non-limiting example, the formula 302 of Figure 3 can be converted into one or more tokens (e.g., a function SUMIF token, a constant "Delhi" token, a reference customers[city] token, a reference customers[age] token, among other tokens).

Turning to the parser submodule 126, the parser submodule 126 is configured for taking the token stream generated by the lexer submodule 124 and transforming the token stream into a hierarchical and organized abstract syntax tree 304 as shown in Figure 3.

In one embodiment, the parser submodule 126 adheres to the predefined grammar rules set by the spreadsheet grammar rule submodule 122 or other rules. These rules define the syntax and structure of valid spreadsheet formulas, including the order of operations, function call patterns, and operator precedence. The parser submodule's primary objective is to ensure that the input formula is syntactically correct and can be effectively interpreted and evaluated and used to generate a hierarchical abstract syntax tree.

In one embodiment, the parser submodule 126 accomplishes its tasks by systematically analyzing the token stream from the lexer submodule 124, recognizing the relationships between tokens (e.g., based on one or more rules of the spreadsheet grammar rule submodule 122 or other rules), and building the abstract syntax tree based on the token stream and identified relationship between tokens and/or token types. Each node (e.g., terminal node or nonterminal node or the like) in the resulting abstract syntax tree corresponds to a specific syntactic construct within the formula, such as operators, functions, cell references, literals, or the like. The hierarchical arrangement of nodes mirrors the formula's structure, making it possible to parse, evaluate, and manipulate the formula with precision.

In another embodiment, the parser submodule 126 plays a crucial role in error handling. It identifies and manages syntax errors or inconsistencies in user-entered formulas, ensuring that users receive meaningful feedback when they input an invalid formula. This error-handling capability enhances the user experience and helps prevent incorrect formula execution. In various cases, upon detection of an input error, the parser submodule 126 can communicate with the input module 110 and/or output module 170 and display a notification of the error in the spreadsheet interface and/or on a user interface.

In a non-limiting example, Figure 3 represents the hierarchical abstract syntax tree 304 that can be generated using the parser submodule 126. For example, the parser submodule 126 starts by identifying an equal sign 306 at the beginning of a token stream or cell (e.g., row and column). The equal sign 306 can then be placed at a top of the hierarchical abstract syntax tree 304. By detecting the equal sign 306, the parser submodule 126 can determine that the token stream or cell comprises a function call or formula call 308. Next, based on a determination that the token stream cell comprises a function call or formula call 308, the parser submodule 126 can next identify the type of function or formula (e.g., function name 310) defined in the token stream or cell using one or more rules defined by the spreadsheet grammar rule submodule 122 and the arguments 312 associated with the function name 310. In various cases, the parser submodule 126 can determine the order of operations based on the function name and/or type or structure of arguments associated with the function name. For example, a first expression 314 followed by a comma of the SUMIF formula can define a condition when a value should be summed, as explained above. Once the first expression is determined, the parser submodule 126 can further determine a source 316 of the condition (e.g., a location or position where the condition can be found). For example, the source for the condition could be from a table called "customers" and a column called "city." Each of these (e.g., tablename, customers, columnname, city, or the like) could form one or more nodes (e.g., terminal nodes (e.g., customer or city or the like) or non-terminal nodes (e.g., table name or column name or the like) of the first expression of the abstract syntax tree 304. In various cases, "customers" and "city" can be arranged on a bottom portion of the abstract syntax tree. The process could be repeated for each of the operators, functions, literals, or the like of the formula to form the hierarchical abstract syntax tree 304.

In various cases, a listener submodule 128 can be configured to serve as an observer or event handler that monitors and reacts to specific events or actions during the parsing of a formula by parser submodule 126. In certain embodiments, the listener submodule 128 is an optional component in the abstract syntax tree generation module 120.

In one embodiment, while the core responsibility of parsing and constructing the abstract syntax tree is typically handled by the parser submodule 126, the listener submodule 128 provides an extension point for additional customization and interaction. The listener submodule 128 can be programmed to respond to specific syntactic or semantic events within the formula, enhancing the parser submodule's flexibility and functionality. As an example, implemented using SQL databases, functions such as validating data types and function arguments, as well as providing context-specific error message, the analysis by SQL databases allows for reduced memory overhead as errors are identified and rectified early in the process, thus preventing the inefficient use of resources on erroneous or suboptimal queries.

In certain embodiments, the listener submodule 128 can be configured to perform various tasks, which include, but are not limited to semantic analysis, custom error handling, optimizations and custom extensions. In one embodiment, the listener submodule 128 can perform deeper semantic analysis beyond basic syntax checking. For example, the listener submodule 128 can validate that function arguments match the expected types or provide context-specific error messages. In another embodiment, the listener submodule 128 can optimize the resulting abstract syntax tree by simplifying expressions, removing redundancies, or reordering operations for better computational efficiency. For example, SQL databases are designed to be more effective in optimizing abstract syntax trees by simplifying expressions, eliminating redundancies, and reordering operations of the abstract syntax tree to enhance computational efficiency. It is to be appreciated that optimized processing leads to decreased memory usage, as the database engine can execute a more efficient version of the query than a spreadsheet program.

In yet another embodiment, the listener submodule 128 can be used to customize error handling based on specific conditions. It can provide detailed error messages or trigger specific actions when certain types of errors are encountered.

In yet another embodiment, the listener submodule 128 can be extended to support additional functionality unique to the spreadsheet environment. In certain embodiments, the listener submodule 128 adds an extra layer of adaptability and control to the abstract syntax tree generation process, allowing capabilities of fine-tuning and customizing on how spreadsheet formulas are parsed, validated, and processed.

In summary, the lexer submodule 124 tokenizes the input formula, breaking it down into manageable units, which are then analyzed by the parser submodule 126 following predefined grammar rules such as those defined in spreadsheet grammar rule submodule 122 to construct the abstract syntax tree 304. The listener submodule 128, if employed, adds an extra layer of customization and control, allowing enhancement to the parsing and processing based on specific needs or conditions. Together, these submodules ensure the accurate and structured representation of the spreadsheet formula in the form of an abstract syntax tree, enabling further computation and analysis of the formula.

Once the abstract syntax tree module is generated based on the formula, the expression tree generation module 130 is configured to transform the one or more abstract syntax trees generated by the abstract syntax tree generation module 120 into one or more expression trees (method 200 at block 206). In various cases, similar to the abstract syntax tree, the expression tree is also hierarchical. The primary objective of the expression tree generation module 130 is to simplify and represent the business logic of spreadsheet formulas in a more structured and manageable format. Redundancies and complexities present in the abstract syntax tree may be removed during this transformation, resulting in a more concise and manageable representation.

In one embodiment, to perform the transformation, the expression tree generation module 130 utilizes an Abstract Syntax Tree Visitor. This visitor pattern allows the expression tree generation module 130 to traverse the abstract syntax tree systematically, visiting each node (e.g., each terminal node and non-terminal node or the like) and performing specific actions based on the type of node encountered. The primary purpose of the Abstract Syntax Tree Visitor is to provide a mechanism for traversing the nodes of an abstract syntax tree and performing specific operations on each type of node without modifying the structure of the tree.

In a non-limiting example, at least part of the formula of Figure 3 may be represented as an expression tree data object which simplifies the formula:
FunctionCallExpr{function=SUMIFS, aliasTableName='customers_1', aliasColumnName='newColumn', operation='FUNCTIONCALL', operands='[]', dataType='8', text='null'}. In this expression tree, SUMIFS is the name of the function being called. It suggests that the expression is trying to compute the sum of values based on certain conditions. The aliasTableName indicates that the function is operating on a table with the alias name 'customers_1'. The aliasColumnName indicates that the column on which the function is applied is 'newColumn'. The 'operation' specifies that the operation being performed is a function call. The operands are enclosed in square brackets. The 'dataType' represents the data type of the result of the function call. The 'text' field is set to 'null', which could imply that the expression is not providing a literal value but might rely on other data or conditions.

In another embodiment, the abstract syntax tree is traversed in a depth-first or breadth-first manner, depending on configurable parameters. At each node, the expression tree generation module 130 performs operations to simplify the structure of the abstract syntax tree. For example, it may break down complex abstract syntax tree nodes into simpler elements like logical expressions, arithmetic expressions, and function call expressions. The transformation process involves creating a new tree structure, the expression tree, where nodes represent elements of the formula's business logic. In a non-limiting example, the equal sign can be removed at the beginning of the abstract syntax tree and replaced with a function call or other feature.

In yet another embodiment, the resulting expression tree is organized hierarchically, with nodes representing different types of expressions found in the original formula. In a non-limiting example, types of nodes may include logical expressions (e.g., AND, OR), arithmetic expressions (e.g., addition, multiplication), function call expressions (e.g., SUM, IF), and other elements specific to the business logic of the formula. The structure of the expression tree is designed to facilitate ease of interpretation and manipulation. In a non-limiting example, the SUMIF function of Figure 3 can be simplified into a separate SUM function and an IF function with the corresponding values or content sources associated with each function.

Next, the relational algebra transformation module 140 is configured to transform the expression tree generated by the expression tree generation module 130 into relational algebra expressions (e.g., step 208 of method 200).

The relational algebra transformation module 140 takes the expression tree generated from a given spreadsheet formula as input and applies a series of transformations and optimizations, including further simplification of expressions, detection of common subexpressions, and pruning of unnecessary parts of the query. These transformations are based on a set of rules and heuristics that are designed to improve query performance and reduce the amount of data that needs to be processed.

In an embodiment, the relational algebra transformation module 140 is configured to simplify expressions within the expression tree. This involves reducing complex expressions to their simplest forms while preserving their original meaning. For example, it might simplify arithmetic expressions, eliminate redundant operations, and optimize mathematical constants.

In some embodiments, the relational algebra transformation module 140 identifies common subexpressions within the Expression Tree. When the same subexpression appears multiple times in a formula, the relational algebra transformation module 140 optimizes by evaluating the subexpression only once and storing the result for reuse, reducing computational redundancy. In a non-limiting example, by identifying the table or data source associated with customers, the relational algebra transformation module 140 does not need to re-identify the table or data source again when the customer table is identified again in the expression tree.

In an embodiment, parts of the expression tree may be irrelevant or redundant for the specific computation required. The module can prune these unnecessary parts, reducing the complexity of the expression tree and improving query performance.

In an embodiment, the transformations and optimizations are based on a set of predefined rules and heuristics. These rules define how specific patterns within the expression tree should be handled to achieve optimal performance. The module may use domain-specific knowledge to apply context-specific rules.

In an embodiment, after applying these transformations and optimizations, the relational algebra transformation module 140 produces an optimized version of a relational algebra expression. This optimized relational algebra expression represents the spreadsheet formula in a form that is more efficient for computation and analysis.

In another embodiment, the optimized relational algebra expression is represented as a set of relational algebra expressions. These expressions define the logical operations that need to be performed to execute a database query efficiently. Relational algebra provides a formal way to express data manipulation operations, making it easier to process and optimize database queries.

In certain embodiments, the module utilizes the Apache Calcite framework to perform these transformations. Apache Calcite is a powerful tool for query optimization and execution, making it well-suited for processing and optimizing the relational algebra expressions derived from the relational algebra transformation module 140.

In some embodiments, a goal of the relational algebra transformation module 140 is to improve query performance by reducing unnecessary computations and data processing. By simplifying expressions, detecting common subexpressions, and pruning irrelevant parts of the query, the module helps optimize the execution of spreadsheet formulas.

In certain embodiments, the relational algebra transformation module 140 may allow for customization and extensibility. The relational algebra transformation module 140 may allow defining additional rules or heuristics to tailor the optimization process to the unique needs of their application.

For example, the relational algebra transformation module 140 can play an important role in enhancing the performance and efficiency of spreadsheet formula processing. It takes the expression tree as input, applies a set of predefined transformations and optimizations, and outputs an optimized representation, often in the form of relational algebra expressions, that can be executed more efficiently. This relational algebra transformation module 140 is useful for ensuring that spreadsheet calculations are performed as quickly and accurately as possible. In a non-limiting example, at least part of the formula of Figure 3 may be represented as a relational algebra expression data object:

```
       rel#6: LogicalProject.NONE.[](
         input=LogicalTableScan#3,
         inputs=0..6,
         exprs=[$SCALAR_QUERY({
            LogicalProject(newColumn=[COALESCE(MAX($0), 0)])
            LogicalTableScan(table=[[customers_1]])
         })]
       )
```

The relational algebra expression involves scanning a table (e.g., the table provided on the spreadsheet interface), applying a scalar query with a logical projection to create a new column. The new column contains the result of the COALESCE function applied to the maximum value of a specific column from the "customers_1" table. The output of this expression is a table with the original columns from the "customers_1" table and an additional column calculated based on the described logic (e.g., if the customers are associated with a particular condition, then sum values of customers associated with the particular condition). The new column would contain the maximum value of a specified column, ensuring that if the maximum is null, it is replaced with 0. This is the second-to-last step of converting the formula to one or more database queries.

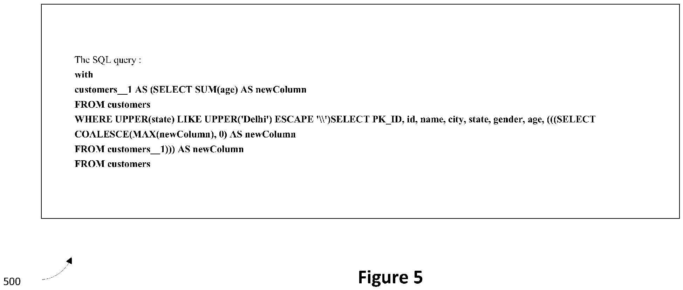

In some embodiments, the database query generator module 150 is configured for taking the set of relational algebra expressions as input, which represent the logical operations needed to execute a spreadsheet formula efficiently, and translating them into database queries (e.g., SQL queries). In a non-limiting example, SQL query 500 of Figure 5 represents the SQL query that can be generated from the formula 300 entered into a spreadsheet interface using the abstract syntax tree generation module 120, the expression tree generation module 130, and the relational algebra transformation module 140.

In one embodiment, the input to the database query generator module 150 is the set of relational algebra expressions that were produced by the relational algebra transformation module 140. These expressions describe the computations required to evaluate the spreadsheet formula. The relational algebra expressions are a formal way of representing data manipulation operations. They consist of various operators and operands that define how data should be retrieved, filtered, joined, and transformed to obtain the desired results.

In certain embodiments, the module utilizes Apache Calcite, an open-source framework for optimizing and processing SQL queries and relational algebra expressions. It provides a RelToSql Converter component that can be used to translate relational algebra expressions into database queries.

In one embodiment, during the conversion, the database query generator module 150 maps the various relational algebra operators and expressions to their corresponding database constructs (e.g., SQL constructs or the like). Based on the mappings and transformations, the database query generator module 150 generates one or more database queries (e.g., SQL queries or the like) that express the same logic as the original relational algebra expressions. These database queries are structured to interact with a database or data source, making them executable for data retrieval and computation.

In another embodiment, depending on the requirements of the system, the module may choose to perform further query optimization using Apache Calcite's capabilities. This can include optimizations like predicate pushdown, join reordering, and index selection to improve query performance.

In another embodiment, the output of the database query generator module 150 is one or more database queries (e.g., SQL queries or the like) that can be executed against a database or data source to compute the results of the spreadsheet formula efficiently.

In summary, the database query generator module 150 is configured to generate the database queries that can be executed against a database. It leverages Apache Calcite's RelToSql Converter to perform the translation, mapping the relational algebra operators and expressions to their database or SQL counterparts. This conversion enables the efficient execution of spreadsheet formulas in a database-driven environment.

The query execution module 160 is configured for executing database queries (e.g., SQL queries) generated by the database query generator module 150 against a retrieved data source (method 200, block 212). Its primary purpose is to manage the execution of these queries efficiently, retrieve the necessary data, and produce the final results of the spreadsheet formula computation.

In one embodiment, the query execution module 160 is responsible for receiving database queries from the database query generator module 150 and managing their execution. It maintains a queue of incoming queries, prioritizes them if necessary, and schedules their execution based on available system resources and priorities. The query execution module 160 ensures that queries are executed in an optimized and orderly fashion, minimizing resource contention and maximizing query performance.

In another embodiment, the query execution module 160 is configured for taking database queries from the queue and executing them against the data source. The query execution module 160 establishes a connection to the data source, sends the queries for execution, and retrieves the query results. The query execution module 160 may employ connection pooling techniques to efficiently manage and reuse database connections, reducing overhead and improving performance.

In another embodiment, the query execution module 160 interacts with the data source, which could be a relational database, data warehouse, or any other data storage system. It uses appropriate drivers, libraries, or APIs to establish connections, communicate with the data source, and retrieve data in response to the executed database queries.

In yet another embodiment, depending on the complexity of the database queries and the data source, the query execution module 160 may perform query optimization. In certain embodiments, optimization techniques may include query plan generation, index selection, join optimization, and predicate pushdown to improve query performance. These optimizations are crucial for ensuring that the queries execute efficiently, especially when dealing with large datasets.

In certain embodiments, once the database queries are executed, the query execution module 160 processes the query results. In order to process the query results, the query execution module 160 may aggregate data, apply further calculations or transformations, and format the results in a suitable format for presentation or further analysis.

In certain embodiments, the query execution module 160 is equipped with robust error-handling mechanisms to manage unexpected situations during query execution. The query execution module 160 can capture and log errors, provide meaningful error messages, and take appropriate actions to handle errors, such as retrying failed queries or rolling back transactions. The query execution module 160 ensures that the retrieved data is accurate, complete, and aligned with the query's logic.

In other embodiments, to handle multiple concurrent requests, the query execution module 160 implements concurrency control mechanisms. It ensures that queries do not interfere with each other, maintaining data consistency and integrity.

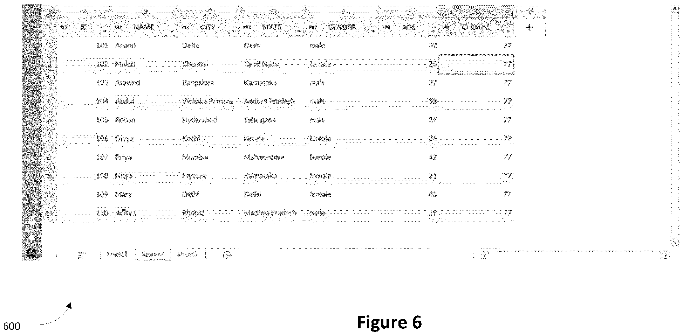

In one embodiment, the output module 170 is a spreadsheet-like user interface for displaying the results of executed spreadsheet formulas, SQL queries, or other data computations (block 214 of method 200). The output module 170 not only presents data in a tabular format similar to traditional spreadsheets but also provides the capability to visualize data through graphical elements such as charts and graphs. A representation of the user interface 600 of the output module is shown in Figure 6.

In an embodiment, the output module 170 is configured to present the computed data to the user in a structured and visually appealing manner. Data is typically displayed in tabular form, similar to rows and columns in a spreadsheet, making it easy for users to view, edit, and manipulate.

In an embodiment, the output module 170 includes a tabular data grid component that can display the results as rows and columns. In another embodiment, users can navigate through the data, sort columns, apply filters, and perform basic data manipulation tasks similar to a spreadsheet.

In some embodiments, to enhance data understanding and analysis, the output module 170 supports various types of graphical elements and visualization components such as charts, graphs and dashboards. Users can generate charts like bar charts, line charts, pie charts, scatter plots, etc., to visualize numeric data trends. For network or hierarchical data, graph visualizations can be generated, showing relationships and dependencies. Users can create customizable dashboards containing multiple charts and visualizations to gain insights from different angles.

Further, the output module 170 allows users to customize the appearance and behavior of data presentation. Users can choose chart types, set chart properties (e.g., colors, labels), define chart axes, and specify data series for visualization. Configuration options might include choosing data aggregation methods, selecting chart themes, and defining formatting rules.

Interactivity is a crucial aspect of the output module 170. Users can interact with data and visualizations in real-time. Users can click on data points in charts for details, drill-down into specific data subsets, and apply filters dynamically to update the displayed information.

The output module 170 provides options for users to export data and visualizations to various formats, including Excel, CSV, PDF, or image formats. Further, the output module 170 allows users to share their results with colleagues or stakeholders through email, links, or collaborative platforms.

In some cases, the output module 170 is designed to be responsive, adapting to different screen sizes and orientations, ensuring usability on both desktop and mobile devices. Further, the output module 170 is configured to handle scenarios where data is continuously changing or streaming in a data source, the output module 170 can support real-time updates to the data source to keep displayed data current. In another embodiment, the output module 170 can integrate with data sources, databases, or APIs to fetch live data or to update data in real-time. Data integration capabilities ensure that the displayed information is always up-to-date.

Further, the output module 170 can support extensibility through plugins or custom scripting, allowing users to add custom chart types or data processing logic.

In summary, the output module 170 is a spreadsheet-like user interface that plays a pivotal role in presenting computed data to users. It offers a combination of tabular data representation and graphical visualization, empowering users to analyze and interpret data effectively. Customization, interactivity, real-time updates, and security measures make it a versatile and user-friendly component for data-driven applications.

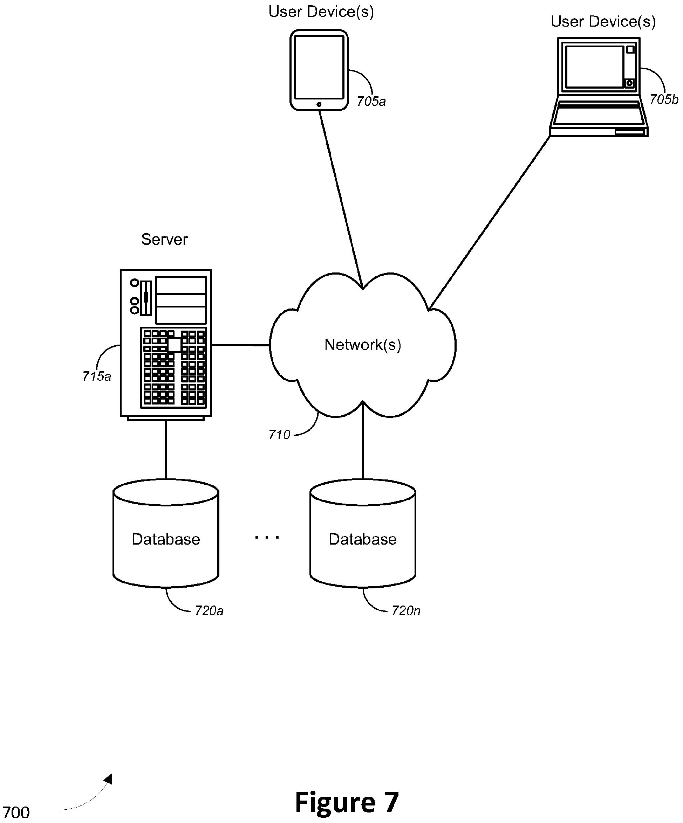

Turning to Figure 7, Figure 7 represents an exemplary computing system 700 for implementing modules 110-170 and/or the method of Figure 2. The computing system 700 can include one or more user computers, user devices, or customer devices 705. A user computer, user device, or customer device 705 can be a general purpose personal computer (including, merely by way of example, desktop computers, tablet computers, laptop computers, handheld computers, and the like, running any appropriate operating system, several of which are available from vendors such as Apple, Microsoft Corp., and the like), cloud computing devices, a server(s), and/or a workstation computer(s) running any of a variety of commercially-available UNIX^{™} or UNIX-like operating systems, or the like. A user computer, user device, or customer device 705 can also have any of a variety of applications, including one or more applications configured to perform methods provided by various embodiments (as described above, for example), as well as one or more office applications, database client and/or server applications, and/or web browser applications.

In various cases, the one or more user devices 705 can be configured to display one or more spreadsheet like interface, or other spreadsheet program capable of receiving one or more formulas.

Certain embodiments operate in a networked environment, which can include a network(s) 710. The network(s) 710 can be any type of network familiar to those skilled in the art that can support data communications using any of a variety of commercially-available (and/or free or proprietary) protocols, including, without limitation, TCP/IP, SNA^{™}, IPX^{™}, AppleTalk^{™}, and the like. Merely by way of example, the network(s) 710 can each include a local area network ("LAN"), including, without limitation, a fiber network, an Ethernet network, a Token-Ring^{™} network, and/or the like; a wide-area network ("WAN"); a wireless wide area network ("WWAN"); a virtual network, such as a virtual private network ("VPN"); the Internet; an intranet; an extranet; a public switched telephone network ("PSTN"); an infra-red network; a wireless network, including, without limitation, a network operating under any of the IEEE 802.11 suite of protocols, the Bluetooth^{™} protocol known in the art, and/or any other wireless protocol; and/or any combination of these and/or other networks.

Embodiments can also include one or more server computers 715. Each of the server computers 715 may be configured with an operating system, including, without limitation, any of those discussed above, as well as any commercially (or freely) available server operating systems. Each of the servers 715 may also be running one or more applications, which can be configured to provide services to one or more user devices 705 and/or other servers 715.

In certain embodiments of the present invention, SQL database systems are configured to utilize server workload sharing mechanisms to achieve enhanced efficiency, which is particularly relevant in environments where large-scale data processing and complex query execution are common. For example, database systems are configured to distribute workload across multiple servers, enabling the sharing of computational tasks and resources.

In some embodiments, the database system employs load balancing techniques to evenly distribute the processing load across a network of servers. This is achieved through algorithms that dynamically allocate tasks based on each server's current load and processing capabilities. By distributing the workload, the system ensures that no single server becomes a bottleneck, thereby optimizing overall performance and reducing the time taken to process queries and transactions.

An implementation of the system involves parallel query execution, where a single query is divided into smaller sub-queries that are executed concurrently across multiple servers. This parallelism accelerates query processing times, especially beneficial for complex queries involving large datasets. The system orchestrates the execution of these sub-queries and consolidates the results, ensuring that the final output is coherent and accurate.

In some embodiments, the system is configured to optimize the use of hardware resources such as CPU, memory, and storage across the server network. This optimization is achieved through intelligent resource allocation strategies that consider factors such as server capacity, data locality, and network latency. The system's scalable architecture allows it to adapt to increasing data volumes and processing demands by incorporating additional servers into the network as needed.

An embodiment provides for fault tolerance and high availability. For example, the system is designed to handle server failures or downtime without significant impact on overall performance. It achieves this through techniques such as data replication and automatic failover processes. In the event of a server failure, tasks are automatically redistributed among the remaining servers, ensuring continuous operation and minimal disruption to database services.

In an embodiment, the system is equipped with mechanisms for dynamic workload adjustment. These mechanisms monitor server performance and workload in real-time and can make adjustments to the distribution of tasks as necessary. This dynamic approach allows the system to respond to fluctuating demands, maintaining optimal efficiency under varying operational conditions.

The server computers 715, in some embodiments, might include one or more application servers, which can be configured with one or more applications accessible by a client running on one or more of the user devices 705 and/or other servers 715. Merely by way of example, the server(s) 715 can be one or more general purpose computers capable of executing programs or scripts in response to the user devices 705 and/or other servers 715, including, without limitation, web applications (which might, in some cases, be configured to perform methods provided by various embodiments). The application server(s) can also include database servers, including, without limitation, those commercially available from OracleD, Microsoft□, Sybase□, IBMD, and the like, which can process requests from clients (including, depending on the configuration, dedicated database clients, API clients, web browsers, etc.) running on a user device 705 and/or another server 715. In some embodiments, an application server can perform one or more of the processes disclosed in modules 110-170, as described in detail above. Data provided by an application server or database server may be formatted as one or more spreadsheets and transmitted to one or more user devices 705.

In certain embodiments, the system can include one or more databases 720a-720n (collectively, "databases 720"). The location of each of the databases 720 is discretionary: merely by way of example, a database 720a might reside on a storage medium local to (and/or resident in) a server 715a (and/or a user computer, user device, or customer device 705). Alternatively, a database 720n can be remote from any or all of the computers 705, 715, so long as it can be in communication (e.g., via the network 710) with one or more of these. In a particular set of embodiments, a database 720 can reside in a storage-area network ("SAN") familiar to those skilled in the art. (Likewise, any necessary files for performing the functions attributed to the computers 705, 715 can be stored locally on the respective computer and/or remotely, as appropriate.) In one set of embodiments, the database 720 can be a relational database, such as an Oracle database, that is adapted to store, update, and retrieve data in response to SQL-formatted commands. The database might be controlled and/or maintained by a database server, as described above, for example.

The databases 720 can be optimized for handling large datasets and complex queries and database queries can leverage indexing and other optimization techniques that are designed to efficiently retrieve and manipulate data from the one or more databases 720. Thus, by providing a spreadsheet interface on user device 705, receiving a formula in the spreadsheet interface, and converting the formula to a database query can result in improved performance compared to traditional spreadsheet programs, especially when dealing with large volumes of financial data.

The spreadsheet interface on user device 705 can be configured to receive multiple formulas at a same time or about a same time and the user devices 705 and/or servers 715 can the convert the multiple formulas in parallel to one or more database queries, transmit the queries in parallel to the database(s) 720 using the modules 110-160 described above, retrieve the relevant information in parallel from the databases using modules 160 and 170, and display the one or more outputs in parallel. By performing these tasks in parallel, modules 110-170 can significantly speed up data retrieval and analysis, especially in scenarios where financial analysts need to process large datasets quickly.

In various cases, the one or more databases 720 can be configured to update data in real-time as it is received. When new data is received by the one or more databases 720, the modules 110-170 can be configured to rerun the one or more formulas, database queries, or the like and update the one or more outputs using output module 170. All of these updates can occur in real-time and in the background without need for further input by one or more users.

It is to be appreciated that conversion from spreadsheet to database provides various advantages, particularly in terms of computational speed, memory usage, and overall efficiency in data processing. Database systems inherently possess a more robust architecture for managing and manipulating large datasets, which translates into significantly higher computational speeds compared to spreadsheet programs. This can be attributed to the optimized query execution paths, indexing strategies, and efficient data storage mechanisms employed by these systems. Additionally, database systems are adept at handling simultaneous requests and complex data transactions, which spreadsheet programs typically struggle with, especially as the volume of data escalates. For example, in terms of memory usage, database systems are designed to optimize the allocation and utilization of memory resources. Unlike spreadsheet programs that often require loading entire datasets into memory, leading to substantial memory consumption and potential system slowdowns, database systems employ advanced techniques such as data caching, on-demand data retrieval, and intelligent memory management. The efficient memory utilization in database systems (e.g., system illustrated in Figure 7) not only enhances performance but also contributes to overall system stability and reliability.

As an example, system 700 can provide a scalable solution for data management, capable of accommodating growth in data volume without a proportional increase in resource utilization. This scalability is an advantage over spreadsheet programs, which have inherent limitations in handling large datasets and exhibit reduced performance as data complexity and volume grow.

In various cases, when one or more formulas are entered into the spreadsheet program and/or when the one or more database queries are run by the query execution module 160, the data associated with the one or more formulas and/or one or more database queries can be stored in association with the one or more formulas and/or one or more database queries. When new data is added to the one or more databases, the one or more databases 720, servers 715, or the like can determine whether the new data is associated with the one or more formulas and/or one or more database queries. Based on a determination the new data is associated with the one or more formulas and/or one or more database queries, a user interface or the output of the output module 170 can be updated automatically in real-time or upon receipt of the new data. The

Additionally, the one or more databases 720 can provide more robust mechanisms for ensuring data integrity and security. The one or more databases 720 often include features such as transactional support, role-based access control, and encryption. This helps in maintaining the accuracy and confidentiality of financial data, which is crucial for financial analysis.

The one or more databases 720 are designed to efficiently use hardware resources. The one or more databases 720 can optimize storage, memory, and processing power, ensuring that the hardware is utilized effectively. This contrasts with spreadsheets, which may face limitations in terms of the number of cells, columns, and rows they can handle. The one or more databases 720 employ advanced techniques for data compression and storage optimization, reducing the physical storage requirements. This is especially beneficial when dealing with large financial datasets, as it helps save storage space and improve overall system efficiency.

The one or more user devices 705 or servers 715 can utilize database query optimization techniques to determine the most efficient way to execute a query within a database 720. This can lead to faster results and reduced resource usage, enhancing the overall performance of financial analysis tasks. Additionally, database queries (e.g., SQL queries) offer powerful tools for complex querying and reporting, including aggregations, joins, and subqueries. While capable of basic calculations, spreadsheet formulas may become less efficient for complex analysis.

In various cases, by optimizing the database queries using modules 110-170, the optimized queries can significantly enhance the overall performance of the database system. Well-optimized queries execute faster, which means that users experience reduced wait times and get results more quickly. Optimized queries consume fewer system resources such as CPU, memory, and disk I/O. This efficiency is crucial in environments with high concurrency, where multiple users or applications are accessing the database simultaneously.

As the database grows, the efficiency of queries becomes increasingly important. Optimized queries help a system scale more effectively by minimizing the impact of increased data volume on query performance. Optimized queries can reduce the load on the database server. This is especially important in scenarios where there are limitations on hardware resources or budget constraints. Faster query execution times result in a better user experience. Users are more likely to be satisfied and productive when they don't have to wait for extended periods to retrieve data from the database. Query optimization helps in achieving consistent response times for queries. This predictability is crucial for applications where users expect a reliable and timely response. Optimized queries can lead to the retrieval of only the necessary data, reducing the amount of data transferred over the network. This is particularly important in distributed or cloud-based database environments where network bandwidth may be a limiting factor.

While the above is a full description of the specific embodiments, various modifications, alternative constructions and equivalents may be used. Therefore, the above description and illustrations should not be taken as limiting the scope of the present invention which is defined by the appended claims.

## Claims

1. A method for processing a spreadsheet formula, the method comprising:
receiving a first formula;
generating an abstract syntax tree using at least the first formula;
generating an expression tree using at least the abstract syntax tree, the expression tree being organized hierarchically;
obtaining a first algebra expression using at least the expression tree;
generating at least a first database query using at least the first algebra expression;
executing the first database query against at least a first data source to obtain a first result; and
processing the first result to provide an output.

2. The method of claim 1, further comprising processing one or more data sources using at least the first formula.

3. The method of claim 1, further comprising traversing the abstract syntax tree to generate the expression tree, and/or wherein the abstract syntax tree is organized hierarchically.

4. The method of claim 1, further comprising at least one of removing redundant elements from the expression tree or identifying one or more common expressions from the expression tree.

5. The method of claim 1, further comprising optimizing the first algebra expression.

6. The method of claim 1, further comprising establishing a connection to the first data source.

7. The method of claim 1, further comprising executing the first database query against a second data source to obtain the first result.

8. The method of claim 1, further comprising providing an interface for displaying the output, and/or wherein the interface comprises a tabular format allowing for navigation and sorting.

9. The method of claim 1, further comprising updating the output in response to a change at the first data source and executing the first database query in response to the change at the first data source.

10. The method of claim 9, further comprising:
associating first data of at least the first data source with at least the first database query;
detecting second data has been added to at least the first data source;
determining whether the second data is associated with at least the first query; and
based on a determination the second data is associated with at least the first query, updating the output.

11. The method of claim 1, further comprising prioritizing and executing a queue of queries, the queue of queries comprising the first query.

12. An apparatus for processing a spreadsheet formula, the apparatus comprising:
one or more processors; and
a non-transitory computer readable medium communicatively coupled to the one or more processors, the non-transitory computer readable medium having stored thereon computer software comprising a set of instructions that, when executed by the one or more processors, cause the apparatus to:
receive a first formula;
generate an abstract syntax tree using at least the first formula;
generate an expression tree using at least the abstract syntax tree, the expression tree being organized hierarchically;
obtain a first algebra expression using at least the expression tree;
generate at least a first database query using at least the first algebra expression;
execute the first database query against at least a first data source to obtain a first result; and
process the first result to provide an output.

13. The apparatus of claim 12, wherein the set of instructions further cause the apparatus to remove redundant elements from the expression tree.

14. The apparatus of claim 12, wherein the set of instructions further cause the apparatus to update the output in response to a change at the first data source.

15. A device for processing a spreadsheet formula, the device comprising:
one or more processors; and
a non-transitory computer readable medium communicatively coupled to the one or more processors, the non-transitory computer readable medium having stored thereon computer software comprising a set of instructions that, when executed by the one or more processors, cause the device to:
receive at least a first formula;
generate an abstract syntax tree using at least the first formula;
generate an expression tree using at least the abstract syntax tree;
obtain a first algebra expression using at least the expression tree;
generate at least a first database query using at least the first algebra expression;
execute the first database query against at least a first data source to obtain a first result; and
process the first result to provide an output.
